# EUROPÄISCHE PATENTSCHRIFT

(11) **EP 2 344 558 B1**
(45) Veröffentlichungstag und Bekanntmachung des Hinweises auf die Patenterteilung: **03.07.2013**
(21) Anmeldenummer: 09783761.1
(22) Anmeldetag: 06.10.2009
(51) Int. Cl.: C08F 293/00, C08F 2/38, C09J 153/00, C09D 153/00, C08F 6/02, C08F 8/26, C08F 8/34, C08L 53/00

(54) **VERFAHREN ZUR HERSTELLUNG VON ABA-TRIBLOCKCOPOLYMEREN MIT EINEM BREIT VERTEILTEN B-BLOCK.**
METHOD FOR PRODUCING ABA-TRIBLOCK COPOLYMERS WITH A WIDELY DISTRIBUTED B-BLOCK
PROCÉDÉ DE FABRICATION D'UN COPOLYMÈRE TRIBLOC ABA AVEC UN BLOC B À DISTRIBUTION LARGE

(30) Priorität: 12.11.2008 DE 102008043669
(43) Veröffentlichungstag der Anmeldung: 20.07.2011
(73) Patentinhaber: Evonik Röhm GmbH, 64293 Darmstadt (DE); Henkel AG & Co. KGaA, 40191 Düsseldorf (DE)
(72) Erfinder: BALK, Sven, 60594 Frankfurt (DE); KAUTZ, Holger, 45721 Haltern am See / Sythen (DE); FENGLER, Stephan, 60488 Frankfurt (DE); MÄRZ, Monika, 63755 Alzenau (DE); TRÖMER, Christine, 63546 Hammersbach (DE); ZANDER, Lars, 41569 Rommerskirchen (DE); LÜCKERT, Jens, 30890 Barsinghausen (DE); KLEIN, Johann, 40593 Düsseldorf (DE); MÖLLER, Thomas, 40593 Düsseldorf (DE); ERB, Volker, 40595 Düsseldorf (DE)
(86) Internationale Anmeldenummer: PCT/EP2009/062927
(87) Internationale Veröffentlichungsnummer: WO 2010/054893

(56) Entgegenhaltungen:
- EP-A2- 1 637 550
- WO-A1-99/20659
- WO-A1-2007/033887
- WO-A1-2008/012116
- BATT-COUTROT D ET AL: "Synthesis and properties of amphiphilic vinyl acetate triblock copolymers prepared by copper mediated living radical polymerisation" EUROPEAN POLYMER JOURNAL, PERGAMON PRESS LTD. OXFORD, GB, Bd. 39, Nr. 12, 1. Dezember 2003 (2003-12-01), Seiten 2243-2252, XP004471978 ISSN: 0014-3057
- ANNE-VALÉRIE RUZETTE ET AL.: "Molecular Disorder and Mesoscopic Order in Polydisperse Acrylic Block Copolymers Prepared by Controlled Radical Polymerization" MACROMOLECULES, Bd. 39, Nr. 17, 22. Juli 2006 (2006-07-22) , Seiten 5804-5814, XP002556195

## Beschreibung

Die Erfindung betrifft ein kontrolliertes Polymerisationsverfahren zur Herstellung von ABA-Triblockcopolymeren auf (Meth)acrylatbasis mit A-Blöcken, die eine enge, monomodale Molekulargewichtsverteilung aufweisen, und einem B-Block, der eine breite, monomodale Molekulargewichtsverteilung aufweist, sowie deren Verwendung als Bindemittel in Klebstoffen oder Dichtmassen.
Maßgeschneiderte Copolymere mit definierter Zusammensetzung, Kettenlänge, Molmassenverteilung usw. sind ein breites Forschungsfeld. Man unterscheidet unter anderem zwischen Gradienten- und Blockpolymeren. Für solche Materialien sind verschiedene Anwendungen denkbar. Im Folgenden sollen einige davon kurz vorgestellt werden.
Polymere können beispielsweise über ionische Polymerisationsverfahren oder durch Polykondensation bzw. -addition hergestellt werden. In diesen Verfahren ist die Darstellung endgruppenfunktionalisierter Produkte unproblematisch. Dabei ist jedoch ein gezielter Molekulargewichtsaufbau problematisch.

Polymere, die durch einen freiradikalischen Polymerisationsprozess gewonnen werden, zeigen Molekularitätsindizes von deutlich über 1,8. Es liegen bei einer solchen Molekulargewichtsverteilung also zwangsläufig sehr kurzkettige sowie langekettige Polymere im Gesamtprodukt vor. Die kurzkettigen Polymerketten zeigen in Schmelze oder Lösung eine verringerte Viskosität und in einer Polymermatrix eine erhöhte Mobilität gegenüber langkettigen Bestandteilen. Dies führt zum einen zu einer verbesserten Verarbeitbarkeit solcher Polymere und zum anderen zu einer gesteigerten Verfügbarkeit von polymergebundenen funktionellen Gruppen in einer Polymermasse oder Beschichtung.
Langkettige Nebenprodukte führen dagegen zu einer überproportionalen Viskositätszunahme der Polymerschmelze bzw. -lösung. Auch ist die Migration solcher Polymere in einer Matrix deutlich vermindert.

Nachteil von freiradikalisch hergestellten Bindemitteln dieser Art ist jedoch eine statistische Verteilung von funktionellen Gruppen in der Polymerkette. Außerdem ist über eine freiradikalische Polymerisationsmethode weder eine hart-weich-hart Triblockarchitektur noch die gezielte Synthese einzelner Polymerblöcke mit engen Molekulargewichtsverteilungen möglich.

Blockpolymere haben einen sprunghaften Übergang zwischen den Monomeren in der Polymerkette, der als Grenze zwischen den einzelnen Blöcken definiert ist. Ein übliches Syntheseverfahren für AB-Blockpolymere ist die kontrollierte Polymerisation von Monomer A und zu einem späteren Zeitpunkt die Zugabe von Monomer B. Neben der sequentiellen Polymerisation durch chargenweise Zugabe in das Reaktionsgefäß kann ein ähnliches Ergebnis auch dadurch erzielt werden, dass man bei einer kontinuierlichen Zugabe der beiden Monomere deren Zusammensetzungen zu bestimmten Zeitpunkten sprunghaft ändert.

Als lebende bzw. kontrollierte Polymerisationsmethoden eignen sich neben der anionischen oder der Gruppentransfer-Polymerisation auch moderne Methoden der kontrollierten radikalischen Polymerisation wie z.B. die RAFT-Polymerisation.
Die ATRP-Methode (atom transfer radical polymerization) wurde in den 1990-er Jahren maßgeblich von Prof. Matyjaszewski entwickelt (Matyjaszewski et al., J.Am.Chem.Soc., 1995, 117, S.5614; WO 97/18247; Science, 1996, 272, S.866). Die ATRP liefert engverteilte (Homo)Polymere im Molmassenbereich von Mₙ= 10.000-120.000 g/mol. Ein besonderer Vorteil dabei ist, dass das Molekulargewicht regelbar ist. Als lebende Polymerisation gestattet sie ferner den gezielten Aufbau von Polymerarchitekturen wie beispielsweise statistische Copolymere oder auch Block-Copolymer-Strukturen. Kontrolliert radikalische Methoden eignen sich insbesondere auch zur gezielten Funktionalisierung von Vinylpolymeren. Insbesondere von Interesse sind Funktionalisierungen an den Kettenenden (so genannte Telechele) bzw. in der Nähe der Kettenenden. Im Gegensatz dazu ist die gezielte Funktionalisierung am Kettenende bei der radikalischen Polymerisation nahezu unmöglich.

Bindemittel mit definiertem Polymerdesign können durch eine kontrollierte Polymerisationsmethode, z.B. in Form der atom transfer radical polymerisation, zur Verfügung gestellt werden. So sind ABA Triblockcopolymere beschrieben, die über einen unfunktionalisierten B-Block und funktionalisierte A-Außenblöcke verfügen. In EP 1 475 397 sind solche Polymere mit OH-Gruppen, in WO 2007/033887 mit olefinischen, in WO 2008/012116 mit Amin- und in der noch nicht veröffentlichten DE 102008002016 mit Silylgruppen beschrieben. Alle in diesen Schriften beschriebenen Polymere weisen jedoch eine explizit enge Molekulargewichtsverteilung auf.
Über die so genannte kontrollierte Polymerisationsverfahren sind keine Verfahren beschrieben, mit denen es möglich wäre, Polymere herzustellen, die einzelne oder mehrere Blöcke mit gezielt breiter Molekulargewichtsverteilung aufweisen.
Eine bereits etablierte Methode ist die Endgruppenfunktionalisierung eines Poly(meth)acrylats mit olefinischen Gruppen und die anschließende Hydrosilylierung dieser Gruppen. Solche Verfahren finden sich unter anderem in EP 1 024 153,
EP 1 085 027 und EP 1 153 942. Dabei handelt es sich jedoch nicht um Blockcopolymere und es wird explizit auf eine Molekulargewichtsverteilung des Produktes kleiner 1,6 hingewiesen. Ein weiterer Nachteil dieser Produkte gegenüber Polymeren mit mehrfach funktionalisierten Außenblöcken ist die höhere Wahrscheinlichkeit, einseitig nicht funktionalisierte Produkte zu erhalten. Durch den gegenüber den erfindungsgemäßen Polymeren jeweils resultierenden geringeren Funktionalisierungsgrad erhält man für weitere Folgereaktionen wie zum Beispiel im Aushärtprozess von Dichtmassenformulierungen einen niedrigeren Vernetzungsgrad, der der mechanischen Stabilität und chemischen Beständigkeit entgegenwirkt.

Neben Telechelen und Blockstrukturen stellen auch ATRP-synthesisierte - z.B. silylhaltige - (Meth)acrylatcopolymere mit einer statistischen Verteilung und einer engen Molekulargewichtsverteilung eine Alternative dar. Nachteil solcher Bindemittel ist eine engmaschige Vernetzung. Auch haben solche Bindemittelsysteme aufgrund der engen Molekulargewichtsverteilung weder die Vorteile besonders langer, noch besonders kurzer in System enthaltener Polymerketten.

Neben der ATRP kommen zur Synthese funktionalisierter Polymerarchitekuren auch andere Methoden zum Einsatz. Eine weitere relevante Methode soll im Folgenden kurz beschrieben werden. Dabei wird eine Abgrenzung von der vorliegenden Erfindung bezüglich der Produkte und auch der Methodik erfolgen. Insbesondere die Vorteile der ATRP gegenüber anderen Verfahren werden dabei herausgestellt:
Bei der anionischen Polymerisation können Bimodalitäten auftreten. Diese Polymersiationsverfahren können aber nur bestimmte Funktionalisierungen erzeugen. Für die ATRP sind bimodale Verteilungen für Systeme beschrieben. Die Bimodalität dieser Polymere ergibt sich jedoch jeweils aus dem Vorliegen von Blockcopolymeren einerseits und nicht umgesetzten Makroinitiatoren andererseits. Nachteil dieser Verfahren ist es, dass das Produkt aus einer Mischung zweier unterschiedlicher Polymerzusammensetzungen besteht.

In EP 1 637 550 wird die Synthese von MMA-nBA-MMA-Triblockcopolymeren zur Verwendung in thermoplastischen Elastomeren dargelegt. Dem Fachmann ist bekannt, dass solche Materialien im besten Fall in allen Blöcken sehr enge Molekulargewichtsverteilungen aufweisen.

In Ruzette et al. (Macromolecules, 39, 17, S.5804-14, 2006) werden monomodale verteilte Triblockcopolymere mit drei jeweils breit verteilten Polymerblöcken beschrieben. Dieses Ergebnis ist auf eine nicht optimale Versuchsführung zurückzuführen und nicht als gezielt entwickeltes Verfahren zur Herstellung von breit verteilten Blockcopolymeren beschrieben.

In Batt-Coutrot et al. (Europ. Pol. J., 39, 12, S.2243-52, 2003) werden ABA-Triblockcopolymere mit teilweise breit verteilten B-Blöcken aus reinem Polyvinylacetat vorgestellt. Diese entstehen aus Makroinitiatoren, die wiederum unter freiradikalischer Polymerisation gebildet werden.

In WO 99/20659 werden einerseits Polymere mit einer Gesamtverteilung kleiner 2,5 und andererseits Triblockcopolymere aufgezeigt, ohne dass eine Lehre zur Synthese breit verteilter Triblockcopolymere bzw. solche Polymere an sich ausgeführt würde.

### Aufgabe

Eine neue Stufe der Entwicklung sind die im Folgenden beschriebenen Triblockcopolymere.
Aufgabe war es, ein Verfahren zur Synthese von Triblockpolymeren der Struktur ABA aus funktionalisierten Poly(meth)acrylaten zur Verfügung zu stellen. Dabei sollen diese aus A-Blöcken mit in sich enger Molekulargewichtsverteilung von weniger als 1,6 und B-Blöcken, die eine monomodale, breite Molekulargewichtsverteilung mit zum einen langen Polymerketten und zum anderen besonders kurzen Polymerketten aufweisen, zusammengesetzt sein. Insbesondere besteht der Bedarf an ABA-Triblockcopolymeren, deren B-Blöcke mit monomodaler, breiter Molekulargewichtsverteilung einen Polydispersitätsindex von mindestens 1,8 aufweisen und ABA-Triblockcopolymere diese B-Blöcke enthaltend, die insgesamt einen Polydispersitätsindex von mindestens 1,8 aufweisen.
Dabei sind ABA-Triblockcopolymere mit Pentablockcopolymeren der Zusammensetzung ACBCA bzw. CABAC gleichzusetzen.

Eine weitere Aufgabe bestand darin, ABA-Triblockcopolymere bzw. Pentblockcopolymere der Zusammensetzung ACBCA bzw. CABAC dergestalt zur Verfügung zu stellen, dass diese Polymere ausschließlich in den A-Blöcken funktionelle Gruppen tragen. Insbesondere ist Gegenstand dieser Erfindung ein Verfahren zur gezielten Funktionalisierung der A-Blöcke durch den Einbau geeigneter ungesättigter Monomere, die eine zusätzliche funktionelle Gruppe aufweisen.

Aufgabe der vorliegenden Erfindung ist es daher unter anderem auch ein Bindemittel für Klebmassen bzw. Dichtmassen zur Verfügung zu stellen, das eine Blockstruktur aufweist, gezielt nur in einem Typ von Blöcken funktionalisiert ist und kurze, viskositätserniedrigende und gleichzeitig lange, die Adhäsion verbessernde Ketten enthält.

### Lösung

Die Aufgabe wurde gelöst durch das zur Verfügung Stellen eines neuen Polymerisationsverfahrens, das auf der atom transfer radical polymerization (ATRP) basiert. Gelöst wurde die Aufgabe insbesondere durch eine Initiierung über einen längeren Zeitraum, genauer durch eine Dosierung des Initiators.
Es wird ein Verfahren zur Herstellung von Blockcopolymeren bereitgestellt, dadurch gekennzeichnet, dass es sich um eine sequentiell durchgeführte atom transfer radical polymerization (ATRP) handelt, bei der ein bifunktioneller Initiator zur Polymerisationslösung gegeben wird, und dass das Blockcopolymer insgesamt und auch der Blocktyp B einen Polydispersitätsindex größer 1,8 aufweist. Dabei wird die Initiierung mit einer Teilmenge des Initiators gestartet, und danach eine zweite Menge des Initiators kontinuierlich zudosiert.
Die Blockcopolymere werden mittels eines sequentiellen Polymerisationsverfahrens hergestellt. Das heißt, dass die Monomermischung zur Synthese der Blöcke beispielsweise A erst nach einer Polymerisationszeit t₂ zu dem System gegeben werden, wenn die Monomermischung zur Synthese des Blocks beispielsweise B zu mindestens 90%, bevorzugt zu mindestens 95% umgesetzt worden ist. Durch dieses Verfahren wird gewährleistet, dass die B Blöcke frei von Monomeren der Zusammensetzung A sind, und dass die A Blöcke weniger als 10%, bevorzugt weniger als 5% der Gesamtmenge der Monomere der Zusammensetzung B enthalten. Die Blockgrenzen befinden sich nach dieser Definition an der jeweiligen Stelle der Kette, an der sich die erste Wiederholungseinheit der zugegebenen Monomermischung - in diesem Beispiel der Mischung A - befindet. Ein nur 95%iger Umsatz hat den Vorteil, dass die verbleibenden Monomere, vor allem im Falle von Acrylaten, einen effizienteren Übergang zur Polymerisation einer zweiten Monomerzusammensetzung, vor allem von Methacrylaten, ermöglichen. Auf diese Weise wird die Ausbeute von Blockcopolymeren deutl ich verbessert.

Im erfindungsgemäßen Verfahren wird der Initiator zur Polymerisation der Monomermischung B nur teilweise zur Initiierung vorgelegt und der Rest über einen längeren Zeitraum zur Polymerlösung zudosiert. Mit der ersten Charge wird die Polymerisation gestartet. Dabei macht die erste Initiatorcharge 10% bis 60%, bevorzugt 20% bis 40% der gesamten Initiatormenge aus. Mit der Dosierung der verbleibenden Initiatormenge wird sofort oder leicht zeitversetzt nach Auftreten einer Exotherme, spätestens jedoch nach 10 min begonnen. Es wird über einen Zeitraum t₁, der je nach angestrebtem Molekulargewicht variieren kann, zudosiert. Die Zeit t₁ kann zwischen 60 Minuten und 6 Stunden, bevorzugt zwischen 90 Minuten und 3 Stunden betragen. Nach beendeter Dosierung wird vor der Zugabe der zweiten Monomermischung A bzw. C für die Polymerisationszeit t₂ weiter polymerisiert. t₂ kann als Beispiel für ein angestrebtes Molekulargewicht von 10000 g/mol bis 40000 g/mol zwischen 5 min und 6 Stunden, bevorzugt zwischen 30 min und 3 Stunden betragen. Für höhere Molekulargewichte sind durchaus längere Polymerisationszeiten nötig.
Durch geeignete Wahl der Dosierzeit t₁ und der anschließenden Polymerisationszeit t₂ können das minimale Molekulargewicht und die Breite der Molekulargewichtsverteilung der B-Blöcke gezielt eingestellt werden. Durch den schnellen Beginn der Dosierung nach der Primärinitiierung ist ferner gewährleistet, dass man Polymerblöcke B mit einer monomodalen Molekulargewichtsverteilung erhält.

Auf diese Weise werden Makroinitiatoren der Zusammensetzung B für den sequentielllen Aufbau von Blockcopolymeren der Zusammensetzung ABA gebildet. Diese Makroinitiatoren weisen in sich eine Molekulargewichtsverteilung mit einem Polydispersitätsindex zwischen 1,8 und 3,0, bevorzugt zwischen 1,9 und 2,5 auf.
Nach der Polymerisationszeit t₂ wird schließlich die Monomermischung A zugegeben. Durch den Charakter der ATRP stehen zu diesem Zeitpunkt beide vorher Initiierten Polymerspezies der Zusammensetzung B zur Polymerisation zur Verfügung und die die Polymerblöcke A werden unter den bereits bekannten Voraussetzungen der ATRP aufgebaut. Diese Segmente der Polymerketten zeigen entsprechend in sich eine enge Molekulargewichtsverteilung. Dabei können im Fall von Pentablockpolymeren auch Blöcke vom Typ C oder D entsprechend aufgebaut werden.

Ein weiterer Vorteil der vorliegenden Erfindung ist die weiterhin verhinderte Rekombination. So kann auch mit diesem Verfahren die Bildung von besonders hohen Molekulargewichten unterdrückt werden. Solche Polymerbestandteile würden überproportional zu einer Steigerung der Lösungs- bzw. Schmelzviskosität beitragen. Vielmehr weist das erfindungsgemäß hergestellte breit verteilte, monomodale Polymer eine neuartige Polymerverteilung auf. Durch die Vorlage eines Teils des Initiators zur Primärinitiierung werden die Ketten gebildet, die der längsten Polymerisationszeit unterliegen und damit im Endprodukt das höchste Molekulargewicht aufweisen. Somit erhält man ein Polymer, dass zu hohen Molekulargewichten weiterhin die Charakteristika eines mittels kontrollierter Polymerisation hergestellten Polymers aufweist. Die Verteilung zeigt zu niedrigen Molekulargewichten jedoch ein starke Verbreiterung der Molekulargewichtsverteilung, die der eines Produktes, das mittels konventioneller freier radikalischer Polymerisation hergestellt wurde, ähnelt oder sogar breiter ist. Die gesamte Molekulargewichtsverteilung der erfindungsgemäß hergestellten Polymere hat einen Polydispersitätsindex größer 1,8.
Erfindungsgemäß wird als Maß für die Uneinheitlichkeit der Molekulargewichtsverteilung der Polydispersitätsindex als Quotient aus dem Gewichts-und dem Zahlenmittel der Molekulargewichte angegeben. Die Molekulargewichte werden mittels Gelpermeationschromatographie (GPC) gegen einen PMMA-Standard bestimmt.

Eine weitere Ausführungsform der vorliegenden Erfindung ist die gezielte Funktionalisierung der A- bzw. D-Blöcke in ABA, CABAC, ACBCA bzw. CDBDC Blockcopolymeren mit breiter, monomodaler Molekulargewichtsverteilung. Gelöst wurde die Aufgabe durch die Herstellung von Blockcopolymeren mit mindestens 1 und maximal 4 funktionellen Gruppen in den einzelnen A- bzw. D-Blöcken, dadurch, dass Monomermischung A bzw. D aus einer Zusammensetzung enthaltend funktionalisierte (Meth)acrylate und Monomere ausgewählt aus der Gruppe der (Meth)acrylate oder deren Mischungen, die keine zusätzliche funktionelle Gruppe aufweisen, besteht. Die Monomermischungen B und C dagegen bestehen ausschließlich aus (Meth)acrylaten oder deren Mischungen, die keine zusätzliche funktionelle Gruppe aufweisen. Dabei können diese Zusammensetzungen identisch oder unterschiedlich zu dem Anteil der Monomermischung A sein, der keine funktionellen Gruppen aufweist.

Es wurde insbesondere gefunden, dass auch erfindungsgemäße Blockcopolymere mit mindestens 1 und maximal 2 funktionellen Gruppen in den einzelnen A-Blöcken dargestellt werden können.Es können sowohl den Copolymeren des Blockes A, als auch den Copolymeren des Blockes B bzw. C 0-50 Gew.-% mittels ATRP polymerisierbare Monomere, die nicht zu der Gruppe der (Meth)acrylate gezählt werden, zugegeben werden.
Bei den C-Blöcken handelt es sich um Polymerblöcke, die der Grundzusammensetzung der A-Blöcke entsprechen, aber keine weiteren funktionellen Gruppen enthaltene Monomere aufweisen. Bei D-Blöcken handelt es sich um Polymerblöcke, die zum einen in der Grundzusammensetzung dem B-Block und nicht den C-Blöcken entsprechen und zum anderen funktionalisierte Bausteine enthalten.

Gegenüber den im Stand der Technik beschriebenen Verfahren mit z.B. silylterminierten Bindemitteln in der Zusammensetzung kann auch in den erfindungsgemäßen Produkten mit einem relevant höheren Funktionalisierungsgrad eine besseren Vernetzbarkeit erhalten werden. Zusätzlich wird durch eine Verteilung der reaktiven Gruppen auf die Endsegmente in den Blöcken A eine zu engmaschige Vernetzung ausgeschlossen. Mit Endsegmenten ist ein Kettenabschnitt gemeint, der jeweils maximal 25 Massen-% und bevorzugt maximal 10 Massen-% und ganz besonders bevorzugt maximal 5 Massen-% der gesamten Polymerkette ausmacht.

Die besagten funtionellen Gruppen, die in den A-Blöcken enthalten sind, sind nur durch die Auswahl mittels ATRP copolymerisierbarer Monomere eingeschränkt. Die folgende Auflistung dient nur als Beispiel zur Verdeutlichung der Erfindung und dient nicht dazu, die Erfindung in irgendeiner Weise einzuschränken.
So können die A-Blöcke OH-Gruppen aufweisen. Hydroxyfunktionalisierte (Meth)acrylate, die dazu geeignet sind, sind bevorzugt Hydroxyalkyl(meth)acrylate von gradkettigen, verzweigten oder cycloaliphatischen Diolen mit 2-36 C-Atomen, wie beispielsweise 3-Hydroxypropyl(meth)acrylat, 3,4-Dihydroxybutylmono(meth)acrylat, 2-Hydroxyethyl(meth)acrylat, 4-Hydroxybutyl(meth)acrylat, 2-Hydroxypropyl(meth)acrylat, 2,5-Dimethyl-1,6-hexandiolmono(meth)acrylat, besonders bevorzugt 2-Hydroxyethylmethacrylat.
Amingruppen sind beispielsweise durch die Copolymerisation von 2-Dimethylaminoethyl-methacrylat (DMAEMA), 2-Diethylaminoethyl-methacrylat (DEAEMA), 2-*tert*-butylaminoethyl-methacrylat (t-BAEMA), 2-Dimethylaminoethylacrylat (DMAEA), 2-Diethylaminoethyl-acrylat (DEAEA), 2-*tert*-butylaminoethyl-acrylat (t-BAEA), 3-Dimethylaminopropyl-methacrylamid (DMAPMA) und 3-Dimethylaminopropyl-acrylamid (DMAPA) darstellbar.
Polymere mit Allylgruppen können zum Beispiel durch die Copolymerisation von Allyl(meth)acrylat realisiert werden. Polymere mit Epoxygruppen durch die Copolymerisation von Glycidyl(meth)acrylat. Säuregruppen können durch die Copolymerisation von tert-Butyl(meth)acrylat und anschließende Verseifung bzw. thermische Abspaltung von Isobuten realisiert werden.
Beispiele für (Meth)Acrylat gebundene Silylreste seien -SiCl₃, -SiMeCl₂, -SiMe₂Cl, - Si(OMe)₃, -SiMe(OMe)₂, -SiMe₂(OMe), -Si(OPh)₃, -SiMe(OPh)₂, -SiMe₂(OPh), -Si(OEt)₃, -SiMe(OEt)₂, -SiMe₂(OEt), -Si(OPr)₃, -SiMe(OPr)₂, -SiMe₂(OPr), -SiEt(OMe)₂, - SiEtMe(OMe), -SiEt₂(OMe), -SiPh(OMe)₂, -SiPhMe(OMe), -SiPh₂(OMe), - SiMe(OC(O)Me)₂, -SiMe₂(OC(O)Me), -SiMe(O-N=CMe₂)₂ oder -SiMe₂(O-N=CMe₂) aufgeführt. Wobei die Abkürzungen Me für Methyl-, Ph für Phenyl-, Et für Ethyl- und Pr für iso- bzw. n-Propyl- stehen. Ein kommerziell verfügbares Monomer ist zum Beispiel Dynasylan^{®} MEMO der Firma Evonik-Degussa GmbH. Dabei handelt es sich um 3-Methacryloxypropyltrimethoxysilan.

Vorteilhaft ist, dass die zur Funktionalisierung eingesetzten Monomere polymerisiert werden, ohne dass es zu Vernetzungsreaktionen kommt.

Die Schreibweise (Meth)acrylat steht für die Ester der (Meth)acrylsäure und bedeutet hier sowohl Methacrylat, wie z.B. Methylmethacrylat, Ethylmethacrylat usw., als auch Acrylat, wie z.B. Methylacrylat, Ethylacrylat usw., sowie Mischungen aus beiden. Monomere die sowohl in Block A als auch in Block B polymerisiert werden sind ausgewählt aus der Gruppe der (Meth)acrylate wie beispielsweise Alkyl(meth)acrylate von gradkettigen, verzweigten oder cycloaliphatischen Alkoholen mit 1 bis 40 C-Atomen, wie zum Beispiel Methyl(meth)acrylat, Ethyl(meth)acrylat, n-Butyl(meth)acrylat, i-Butyl(meth)acrylat, t-Butyl(meth)acrylat, Pentyl(meth)acrylat, 2-Ethylhexyl(meth)acrylat, Stearyl(meth)acrylat, Lauryl(meth)acrylat, Cyclohexyl(meth)acrylat, Isobornyl(meth)acrylat; Aryl(meth)acrylate wie zum Beispiel Benzyl(meth)acrylat oder Phenyl(meth)acrylat die jeweils unsubstituiert oder 1-4-fach substituierte Arylreste aufweisen können; andere aromatisch substituierte (Meth)acrylate wie beispielsweise Naphthyl(meth)acrylat; Mono(meth)acrylate von Ethern, Polyethylenglycolen, Polypropylenglycolen oder deren Mischungen mit 5-80 C-Atomen, wie beispielsweise Tetrahydrofurfurylmethacrylat, Methoxy(m)ethoxyethylmethacrylat, 1-Butoxypropylmethacrylat, Cyclohexyloxymethylmethacrylat, Benzyloxymethylmethacrylat, Furfurylmethacrylat, 2-Butoxyethylmethacrylat, 2-Ethoxyethylmethacrylat, Allyloxymethylmethacrylat, 1-Ethoxybutylmethacrylat, 1-Ethoxyethylmethacrylat, Ethoxymethylmethacrylat, Poly(ethylenglycol)methylether(meth)acrylat und Poly(propylenglycol)methylether(meth)acrylat.
Neben den zuvor dargelegten (Meth)acrylaten können die zu polymerisierenden Zusammensetzungen auch weitere ungesättigte Monomere aufweisen, die mit den zuvor genannten (Meth)acrylaten und mittels ATRP copolymerisierbar sind. Hierzu gehören unter anderem 1-Alkene, wie 1-Hexen, 1-Hepten, verzweigte Alkene wie beispielsweise Vinylcyclohexan, 3,3-Dimethyl-1-propen, 3-Methyl-1-diisobutylen, 4-Methyl-1-penten, Acrylnitril, Vinylester wie z.B. Vinylacetat, Styrol, substituierte Styrole mit einem Alkylsubstituenten an der Vinylgruppe, wie z.B. α-Methylstyrol und α-Ethylstyrol, substituierte Styrole mit einem oder mehreren Alkylsubstituenten am Ring wie Vinyltoluol und p-Methylstyrol, halogenierte Styrole wie beispielsweise Monochlorstyrole, Dichlorstyrole, Tribromstyrole und Tetrabromstyrole; heterocyclische Verbindungen wie 2-Vinylpyridin, 3-Vinylpyridin, 2-Methyl-5-vinylpyridin, 3-Ethyl-4-vinylpyridin, 2,3-Dimethyl-5-Vinylpyridin, Vinylpyrimidin, 9-Vinylcarbazol, 3-Vinylcarbazol, 4-Vinylcarbazol, 2-Methyl-1-vinylimidazol, Vinloxolan, Vinylfuran, Vinylthiophen, Vinylthiolan, Vinylthiazole, Vinyloxazole und Isoprenylether; Maleinsäurederivate, wie beispielsweise Maleinsäureanhydrid, Maleinimid, Methylmaleinimid und Diene wie z.B. Divinylbenzol, sowie in den A-Blöcken die jeweiligen hydroxyfunktionalisierten und/oder aminofunktionalisierten und/oder mercaptofunktionalisierten Verbindungen. Ferner können diese Copolymere auch derart hergestellt werden, dass sie eine Hydroxy- und/oder Amino- und/oder Mercaptofunktionalität in einem Substituenten aufweisen. Solche Monomere sind beispielsweise Vinylpiperidin, 1-Vinylimidazol, N-Vinylpyrrolidon, 2-Vinylpirrolidon, N-Vinylpirrolidin, 3-Vinylpyrrolidin, N-Vinylcaprolactam, N-Vinylbutyrolactam, hydrierte Vinylthiazole und hydrierte Vinyloxazole. Besonders bevorzugt werden Vinylester, Vinylether, Fumarate, Maleate, Styrole oder Acrylonitrile mit den A-Blöcken und/oder B-Blöcken copolymerisiert.
Das Verfahren kann in beliebigen halogenfreien Lösungsmitteln durchgeführt werden. Bevorzugt werden Toluol, Xylol, H₂O; Acetate, vorzugsweise Butylacetat, Ethylacetat, Propylacetat; Ketone, vorzugsweise Ethylmethylketon, Aceton; Ether; Aliphate, vorzugsweise Pentan, Hexan; Biodiesel; aber auch Weichmacher wie niedrigmolekulare Polypropylenglycole oder Phthalate.
Die Blockcopolymere der Zusammensetzung ABA werden mittels sequentieller Polymerisation dargestellt.
Neben der Lösungspolymerisation kann die ATRP auch als Emulsions-, Miniemulsions-, Mikroemulsions-, Suspension- oder Substanzpolymerisation durchgeführt werden.

Die Polymerisation kann bei Normaldruck, Unter- oder Überdruck durchgeführt werden. Auch die Polymerisationstemperatur ist unkritisch. Im Allgemeinen liegt sie jedoch im Bereich von -20°C bis 200°C, vorzugsweise von 0°C bis 130°C und besonders bevorzugt von 50°C bis 120°C.
Vorzugsweise weist das erfindungsgemäße Polymer ein zahlenmittleres Molekulargewicht zwischen 5000 g/mol und 100000 g/mol, besonders bevorzugt zwischen 7500 g/mol und 50000 g/mol und ganz besonders bevorzugt ≤ 30000 g/mol auf.
Als bifunktionelle Initiatoren können RO₂C-CHX-(CH₂)ₙ-CHX-CO₂R, RO₂C-C(CH₃)X-(CH₂)ₙ-C(CH₃)X-CO₂R, RO₂C-CX₂-(CH₂)ₙ-CX₂-CO₂R, RC(O)-CHX-(CH₂)ₙ-CHX-C(O)R, RC(O)-C(CH₃)X-(CH₂)ₙ-C(CH)₃X-C(O)R, RC(O)-CX₂-(CH₂)ₙ-CX₂-C(O)R, XCH₂-CO₂-(CH₂)ₙ-OC(O)CH₂X_{,} CH₃CHX-CO₂-(CH2)ₙ-OC(O)CHXCH₃, (CH₃)₂CX-CO₂-(CH₂)ₙ-OC(O)CX(CH₃)₂, X₂CH-CO₂-(CH₂)ₙ-OC(O)CHX₂, CH₃CX₂-CO₂-(CH₂)ₙ-OC(O)CX₂CH₃, XCH₂C(O)C(O)CH₂X, CH₃CHXC(O)C(O)CHXCH₃, XC(CH₃)₂C(O)C(O)CX(CH₃)₂, X₂CHC(O)C(O)CHX₂, CH₃CX₂C(O)C(O)CX₂CH₃, XCH₂-C(O)-CH₂X, CH₃-CHX-C(O)-CHX-CH₃, CX(CH₃)₂-C(O)-CX(CH₃)₂, X₂CH-C(O)-CHX₂, C₆H₅-CHX-(CH₂)ₙ-CHX-C₆H₅, C₆H₅-CX₂-(CH₂)ₙ-CX₂-C₆H₅, C₆H₅-CX₂-(CH₂)ₙ-CX₂-C₆H₅, o,- m- bzw. p-XCH₂-Ph-CH₂X, o,- m- bzw. p-CH₃CHX-Ph-CHXCH₃, o,- m- bzw. p-(CH₃)₂CX-Ph-CX(CH₃)₂, o,- m- bzw. p-CH₃CX₂-Ph-CX₂CH₃, o,- m- bzw. p-X₂CH-Ph-CHX₂, o,- m- bzw. p-XCH₂-CO₂-Ph-OC(O)CH₂X, o,- m- bzw. p-CH₃CHX-CO₂-Ph-OC(O)CHXCH₃, o,- m- bzw. p-(CH₃)₂CX-CO₂-Ph-OC(O)CX(CH₃)₂, CH₃CX₂-CO₂-Ph-OC(O)CX₂CH₃, o,- m- bzw. p-X₂CH-CO₂-Ph-OC(O)CHX₂ oder o,- m- bzw. p-XSO₂-Ph-SO₂ (X steht für Chlor, Brom oder lod; Ph steht für Phenylen (C₆H₄); R repräsentiert einen aliphatischen Rest aus 1 bis 20 Kohlenstoffatomen, der linearer, verzweigter oder auch cyclischer Struktur sein kann, gesättigt oder einfach bzw. mehrfach ungesättigt sein kann und einen bzw. mehrere Aromaten enthalten kann oder aber aromatenfrei ist und n ist eine Zahl zwischen 0 und 20) werden. Vorzugsweise werden 1,4-Butandiol-di-(2-bromo-2-methylpropionat), 1,2-Ethylenglycol-di-(2-bromo-2-methylpropionat), 2,5-Dibrom-adipinsäure-di-ethylester oder 2,3-Dibrom-maleinsäure-di-ethylester verwendet. Aus dem Verhältnis Initiator zu Monomer ergibt sich das spätere Molekulargewicht, falls das gesamte Monomer umgesetzt wird.

Katalysatoren für die ATRP sind in Chem.Rev. 2001, 101, 2921 aufgeführt. Es werden überwiegend Kupferkomplexe beschrieben - unter anderem kommen aber auch Eisen-, Rhodium-, Platin-, Ruthenium- oder Nickelverbindungen zur Anwendung. Allgemein können alle Übergangsmetallverbindungen verwendet werden, die mit dem Initiator, bzw. der Polymerkette, die eine übertragbare Atomgruppe aufweist, einen Redox-Zyklus bilden können. Kupfer kann dazu beispielsweise ausgehend von Cu₂O, CuBr, CuCl, CuI, CuN₃, CuSCN, CuCN, CuNO₂, CuNO₃, CuBF₄, Cu(CH₃COO) oder Cu(CF₃COO) dem System zugeführt werden.

Eine Alternative zu der beschriebenen ATRP stellt eine Variante derselben dar: In der so genannten reversen ATRP können Verbindungen in höheren Oxidationsstufen wie z.B. CuBr₂, CuCl₂, CuO, CrCl₃, Fe₂O₃ oder FeBr₃ eingesetzt werden. In diesen Fällen kann die Reaktion mit Hilfe klassischer Radikalbildner wie beispielsweise AIBN initiiert werden. Hierbei werden die Übergangsmetallverbindungen zunächst reduziert, da sie mit den aus den klassischen Radikalbildnern erzeugten Radikalen umgesetzt werden. Die reverse ATRP wurde u.a. von Wang und Matyjaszewski in Macromolekules (1995), Bd. 28, S. 7572ff beschrieben.
Eine Variante der reversen ATRP stellt der zusätzliche Einsatz von Metallen in der Oxidationsstufe null dar. Durch eine anzunehmende Komproportionierung mit den Übergangsmetallverbindungen der höheren Oxidationsstufe wird eine Beschleunigung der Reaktionsgeschwindigkeit bewirkt. Dieses Verfahren wird in WO 98/40415 näher beschrieben.
Das molare Verhältnis Übergangsmetall zu bifunktionellem Initiator liegt im Allgemeinen im Bereich von 0,02:1 bis 20:1, vorzugsweise im Bereich von 0,02:1 bis 6:1 und besonders bevorzugt im bereich von 0,2:1 bis 4:1, ohne dass hierdurch eine Beschränkung erfolgen soll.
Um die Löslichkeit der Metalle in organischen Lösungsmitteln zu erhöhen und gleichzeitig die Bildung stabiler und dadurch polymerisationsinaktiver Organometallverbindungen zu vermeiden, werden Liganden dem System zugegeben. Zusätzlich erleichtern die Liganden die Abstraktion der übertragbaren Atomgruppe durch die Übergangsmetallverbindung. Eine Auflistung bekannter Liganden findet sich beispielsweise in WO 97/18247, WO 97/47661 oder WO 98/40415. Als koordinativer Bestandteil weisen die als Ligand verwendeten Verbindungen zumeist ein oder mehrere Stickstoff-, Sauerstoff-, Phosphor- und/oder Schwefelatome auf. Besonders bevorzugt sind dabei stickstoffhaltige Verbindungen. Ganz besonders bevorzugt sind stickstoffhaltige Chelatliganden. Als Beispiele seien 2,2'-Bipyridin, N,N,N',N",N"-Pentamethyldiethylentriamin (PMDETA), Tris(2-aminoethyl)amin (TREN), N,N,N',N'-Tetramethylethylendiamin oder 1,1,4,7,10,10-Hexamethyltriethylentetramin aufgeführt. Wertvolle Hinweise zur Auswahl und Kombination der einzelnen Komponenten findet der Fachmann in WO 98/40415.
Diese Liganden können in situ mit den Metallverbindungen Koordinationsverbindungen bilden oder sie können zunächst als Koordinationsverbindungen hergestellt werden und anschließend in die Reaktionsmischung gegeben werden.
Das Verhältnis Ligand (L) zu Übergangsmetall ist abhängig von der Zähnigkeit des Liganden und der Koordinationszahl des Übergangsmetalls (M). Im Allgemeinen liegt das molare Verhältnis im Bereich 100:1 bis 0,1:1, vorzugsweise 6:1 bis 0,1:1 und besonders bevorzugt 3:1 bis 1:1, ohne dass hierdurch eine Beschränkung erfolgen soll. Nach erfolgter ATRP kann die Übergangsmetallverbindung mittels Zugabe einer geeigneten Schwefelverbindung gefällt werden. Mittels Zugabe z.B. von Mercaptanen wird das kettenendständige Halogenatom unter Freisetzung eines Halogenwasserstoffs substituiert. Der Halogenwasserstoff - wie z.B. HBr - protoniert den am Übergangsmetall koordinierten Liganden L zu einem Ammoniumhalogenid. Durch diesen Vorgang wird der Übergangsmetall-Ligand Komplex gequencht und das "nackte" Metall ausgefällt. Anschließend lässt sich die Polymerlösung leicht durch eine einfache Filtration reinigen. Bei besagten Schwefelverbindungen handelt es sich bevorzugt um Verbindungen mit einer SH-Gruppe. Ganz besonders bevorzugt handelt es sich um einen aus der freiradikalischen Polymerisation bekannten Regler wie Ethylhexylmercaptan oder n-Dodecylmercaptan.

Es ergibt sich ein breites Anwendungsfeld für diese Produkte. Die Auswahl der Anwendungsbeispiele ist nicht dazu geeignet, die Verwendung der erfindungsgemäßen Polymere einzuschränken. Bevorzugt können Blockcopolymere mit reaktiven Gruppen der Zusammensetzung ABA, ACBCA, CABAC bzw. CDBDC als Präpolymere für eine feuchtigkeitshärtende Vernetzung eingesetzt werden. Diese Präpolymere können mit beliebigen Polymeren vernetzt werden.

Die bevorzugten Anwendungen für die erfindungsgemäßen Blockcopolymeren der Zusammensetzung ABA, ACBCA, CDBDC oder CABAC mit ≤4 Silylgruppen in den einzelnen A-, bzw. D-Blöcken sind in Dichtmassen, Reaktivschmelzklebstoffen oder in Klebmassen zu finden. Insbesondere bieten sich Verwendungen in Dichtmassen für Anwendungen in den Bereichen Fahrzeug-, Schiffs-, Container-, Maschinen- und Flugzeugbau, sowie in der Elektroindustrie und beim Bau von Haushaltsgeräten an. Weitere bevorzugte Anwendungsgebiete sind Dichtmassen für Bauanwendungen, Heißsiegelanwendungen oder Montagekleber.

Die möglichen Anwendungen für erfindungsgemäß hergestellte Materialien umfassen jedoch nicht nur Bindemittel für Dichtungsmassen oder als Zwischenstufe für die Einführung andersartiger Funktionalitäten. In EP 1 510 550 ist beispielsweise eine Beschichtungszusammensetzung beschrieben, die unter anderem aus Acrylatpartikeln und Polyurethanen besteht. Ein erfindungsgemäßes Polymer führte in einer entsprechenden Formulierung zu einer Verbesserung der Verarbeitungs- und Vernetzungseigenschaften. Denkbare Anwendungen sind zum Beispiel Pulverlackformulierungen.

Mit den neuen Bindemitteln lassen sich vernetzbare einkomponentige und zweikomponentige Elastomere zum Beispiel für eine der aufgeführten Anwendungen herstellen. Übliche weitere Bestandteile einer Formulierung sind Lösungsmittel, Füllstoffe, Pigmente, Weichmacher, Stabilisierungsadditive, Wasserfänger, Haftvermittler, Thixotropiermittel, Vernetzungskatalysatoren, Klebrigmacher (Tackifier), usw. Zur Reduktion der Viskosität können Lösungsmittel eingesetzt werden, z. B. aromatische Kohlenwasserstoffe wie Toluol, Xylol, usw., Ester, wie Ethylacetat, Butylacetat, Amylacetat, Cellosolveacetat, usw., Ketone, wie z. B. Methylethylketon, Methylisobutylketon, Diisobutylketon, usw. Das Lösungsmittel kann bereits im Verlauf der radikalischen Polymerisation zugegeben werden.

Vernetzungskatalysatoren für hydrosilylierte Bindemittel in einer Formulierung zum Beispiel mit entsprechenden Polyurethanen sind die gängigen organischen Zinn-, Blei-, Quecksilber- und Wismutkatalysatoren, z. B. Dibutylzinndilaurat (z. B. von BNT Chemicals GmbH), Dibutylzinndiacetat, Dibutylzinndiketonat (z. B. Metatin 740 von Acima/Rohm + Haas), Dibutylzinndimaleat, Zinnnaphthenat, usw. Es können auch Umsetzungsprodukte von organischen Zinnverbindungen, z. B. Dibutylzinndilaurat mit Kieselsäureestern (z.B. DYNASIL A und 40), als Vernetzungskatalysatoren verwendet werden. Daneben auch Titanate (z.B. Tetrabutyltitanat, Tetrapropyltitanat, usw.), Zirkonate (z.B. Tetrabutylzirkonat, usw.), Amine (z.B. Butylamin, Diethanolamin, Octylamin, Morpholin, 1,3-Diazabicyclo[5.4.6]undezen-7 (DBU), usw.) bzw. deren Carbonsäuresalze, niedermolekulare Polyamide, Aminoorganosilane, Sulfonsäurederivate, und deren Mischungen.

Ein Vorteil der Blockcopolymere ist die Farblosigkeit sowie die Geruchlosigkeit des hergestellten Produkts.
Ein weiterer Vorteil der vorliegenden Erfindung ist eine beschränkte Zahl von Funktionalitäten in den jeweiligen funktionalisierten Polymerblöcken. Ein höherer Anteil funktioneller Gruppen im Bindemittel führt zu einer eventuellen vorzeitigen Vergelung oder zumindest zu einer zusätzlichen Erhöhung der Lösungs- bzw. Schmelzviskosität.

Bedingt durch die höhere Zahl reaktiver Gruppen im Kettenendsegment, ist eine Reaktion der Silylgruppen wahrscheinlicher und eine Vernetzung zu einem engmaschigen Elastomer läuft deutlich schneller ab. Eine gezielte Steuerung der Vernetzungsdichte bzw. der Eigenschaften des vernetzten Endprodukts wird durch eine Verteilung der Funktionalitäten in den Endsegmenten verbessert.
Die im Folgenden gegebenen Beispiele werden zur besseren Veranschaulichung der vorliegenden Erfindung gegeben, sind jedoch nicht dazu geeignet, die Erfindung auf die hierin offenbarten Merkmale zu beschränken.

### Beispiele

Die zahlenmittleren bzw. gewichtsmittleren Molekulargewichte Mn bzw. Mw und der Polydispersitätsindex D = Mw/Mn als Maß für die Molekulargewichtsverteilungen werden durch Gelpermeations-Chromatographie (GPC) in Tetrahydrofuran gegenüber einem PMMA-Standard bestimmt.

### Vergleichsbeispiel 1

In einem mit Rührer, Thermometer, Rückflusskühler, Stickstoffeinleitungsrohr und Tropftrichter ausgestatteten Doppelmantelgefäß wurden unter N₂-Atmosphäre Monomer 1a (genaue Bezeichnung und Mengenangabe in Tabelle 1), 160 mL Propylacetat, Kupfer(I)oxid (Menge siehe Tabelle 1) und N,N,N',N",N"-Pentamethyldiethylentriamin (PMDETA, Menge siehe Tabelle 1) vorgelegt. Die Lösung wird für 15 min. bei 80°C gerührt. Anschließend wird bei gleicher Temperatur eine Menge Initiator1 (siehe Tabelle 1) 1,4-Butandiol-di-(2-bromo-2-methylpropionat) (BDBIB, gesamter Initiator in 52 mL Propylacetat gelöst) zugegeben. Nach 2 min wird mit der gleichmäßigen Zudosierung der Menge Initiator2 (siehe Tabelle 1) 1,4-Butandiol-di-(2-bromo-2-methylpropionat) (BDBIB, gelöst in Propylacetat, s.o.) begonnen. Die Dosierung verläuft ohne Unterbrechung und mit konstanter Dosierrate über den Zeitraum t₁. Nach vollständiger Initiatorzugabe wird die Polymerisationslösung für einen Zeitraum t₂ bei der Polymerisationstemperatur gerührt, bevor eine Probe zur Bestimmung des mittleren Molgewichts Mₙ (mittels SEC) entnommen und eine Mischung aus Monomer 2a und Monomer 3a (genaue Bezeichnung und Mengenangabe in Tabelle 1) zugegeben wird. Die Mischung wird weitere zwei Stunden bei 80 °C gerührt und anschließend durch Zugabe von 3,0 g n-Dodecylmercaptan abgebrochen. Die Lösung wird durch Filtration über Kieselgel und die anschließende Entfernung volatiler Bestandteile mittels Destillation aufgearbeitet. Das mittlere Molekulargewicht wird abschließend durch SEC-Messungen bestimmt. Der Anteil an eingebautem Monomer 3a wird durch ¹H-NMR-Messungen quantifiziert.

### Beispiel 1

Analog dem Beispiel 1 werden die Monomere 1 b, 2b und 3b (genaue Bezeichnung und Mengenangabe in Tabelle 1) eingesetzt. Die Dosierdauer beträgt t₁, die Nachpolymerisation des Blocks B t₂ (genaue Dauer jeweils in Tabelle 1).

### Beispiel 2

Analog dem Beispiel 1 werden die Monomere 1 c, 2c und 3c (genaue Bezeichnung und Mengenangabe in Tabelle 1) eingesetzt. Die Dosierdauer beträgt t₁, die Nachpolymerisation des Blocks B t₂ (genaue Dauer jeweils in Tabelle 1).

### Beispiel 3

Analog dem Beispiel 1 werden die Monomere 1 d, 2d und 3d (genaue Bezeichnung und Mengenangabe in Tabelle 1) eingesetzt. Die Dosierdauer beträgt t₁, die Nachpolymerisation des Blocks B t₂ (genaue Dauer jeweils in Tabelle 1).

**Tabelle 1**

| | Vergleichsbsp.1 | Beispiel 1 | Beispiel 2 | Beispiel 3 |
|---|---|---|---|---|
| Monomer 1 | 1a) n-BA | 1b) n-BA | 1c) n-BA | 1d) n-BA |
| Menge | 200,6 g | 200,6 g | 201,6 g | 200,7 g |
| Kupfer(I)oxid | 1,3 g | 1,3 g | 1,3 g | 1,3 g |
| PMDETA | 3,4 g | 3,3 g | 3,4 g | 3,3 g |
| Initiator1 | 0,85 g | 0,85 g | 0,81 g | 0,81 g |
| Initiator2 | 2,52 g | 2,53 g | 2,44 g | 2,44 g |
| t₁ | 45 min | 120 min | 180 min | 180 min |
| t₂ | 165 min | 60 min | 150 min | 150 min |
| Monomer 2 | 2a) n-BA | 2b) n-BA | 2d) n-BA | 2e) n-BA |
| Menge | 50,2 g | 50,4 g | 50,3 g | 51,1 g |
| Monomer 3 | 3a) MEMO | 3b) MEMO | 3c) AMA | 3d) HEMA |
| Menge | 10,4 g | 10,4 g | 6,8 g | 5,7 g |
| Mₙ (1.Sufe) | 30000 | 27300 | 26800 | 27300 |
| D | 1,60 | 1,88 | 2,14 | 2,11 |
| Mₙ (Endprodukt) | 31900 | 31000 | 28800 | 29400 |
| D | 1,81 | 1,91 | 2,09 | 2,08 |

| | | | | |
|---|---|---|---|---|
| MMA = Methylmethacrylat; n-BA = n-Butylacrylat, MEMO = Dynasylan MEMO (3-Methacryloxypropyltrimethoxysilan), AMA = Allylmethacrylat, HEMA = 2-Hydroxyethylmethacrylat | | | | |

Die Molekulargewichtsverteilungen der ersten Polymerisationsstufen sind jeweils monomodal und weisen einen Molekularitätsindex D größer 1,8 auf. Die Endprodukte haben entsprechend große, wenn auch im Vergleich zu den reinen B-Blöcken kleinere Molekularitätsindizes. Dieser Effekt ergibt sich aus dem insgesamt höheren Molekulargewicht, zeigt jedoch auch, dass die Polymerisation der A-Blöcke kontrolliert abläuft und die Blöcke für sich eine enge Molekulargewichtsverteilung haben. Die Zunahme des Molekularitätsindex in Beispiel 2 auf eine hochmolekulare Schulter zurückzuführen. Diese ergibt sich aus Nebenreaktionen der Silylgruppen unter einer teilweise stattfindenden Kettendimerisierung.
Nach Entfernung des Lösungsmittels können die silyl-funktionalisierten Produkte durch Zugabe geeigneter Trocknungsmittel stabilisiert werden. Auf diese Weise lässt sich eine gute Lagerstabilität ohne weitere Molekulargewichtszunahme gewährleisten.
Das Produkt aus Vergleichsbeispiel 1 ist nicht erfindungsgemäß hergestellt worden. Der Molekularitätsindex D ist mit 1,60 deutlich kleiner als die angestrebten 1,8. Im Vergleich zu dem sonst analog durchgeführten Beispiel 2 ist in diesem Fall die Dosierdauer t₁ mit 45 min kürzer. Für Molekulargewichte größer 20000 g/mol des Blockes B ergibt sich eine Dosierdauer t₁ von mindestens 60 min. Für kürzere Kettenlängen kann eine kürzere Dosierdauer dagegen durchaus ausreichend sein.

Die Übertragung der Ergebnisse auf Pentablockcopolymere der Zusammensetzung ACBCA bzw. CABAC kann analog erfolgen. Die Synthese solcher Copolymere mit enger Verteilung sind beispielsweise in der noch nicht offengelegten Patentanmeldung DE 102008002016 der gleichen Anmelder beschrieben.

### Vergleichsbeispiel 2

In einem mit Rührer, Thermometer, Rückflusskühler, Stickstoffeinleitungsrohr und Tropftrichter ausgestatteten Doppelmantelgefäß wurden unter N₂-Atmosphäre Monomer 1 e (genaue Bezeichnung und Mengenangabe in Tabelle 2), 125 mL Propylacetat, 0,5 g Kupfer(I)oxid und 1,3 g N,N,N',N",N"-Pentamethyldiethylentriamin (PMDETA) vorgelegt. Die Lösung wird für 15 min. bei 80 °C gerührt. Anschließend wird bei gleicher Temperatur in 25 mL Propylacetat gelöster Initiator 1,4-Butandiol-di-(2-bromo-2-methylpropionat) (BDBIB, Menge siehe Tabelle 2) zugegeben. Nach der Polymerisationszeit von drei Stunden wird eine Probe zur Bestimmung des mittleren Molgewichts Mₙ (mittels SEC) entnommen und eine Mischung aus Monomer 2e und Monomer 3e (genaue Bezeichnung und Mengenangabe in Tabelle 2) zugegeben. Die Mischung wird bis zu einem erwarteten Umsatz von mindestens 95% polymerisiert und durch Zugabe von 2,1 g n-Dodecylmercaptan abgebrochen. Die Lösung wird durch Filtration über Kieselgel und die anschließende Entfernung volatiler Bestandteile mittels Destillation aufgearbeitet. Das mittlere Molekulargewicht wird abschließend durch SEC-Messungen bestimmt.

### Vergleichsbeispiel 3

Analog dem Vergleichsbeispiel 1 werden die Monomere 1f, 2f und 3f (genaue Bezeichnung und Mengenangabe in Tabelle 2) eingesetzt.

### Vergleichsbeispiel 4

Analog dem Vergleichsbeispiel 2 werden die Monomere 2g, 3g und 4g (genaue Bezeichnung und Mengenangabe in Tabelle 2) eingesetzt.

**Tabelle 2**

| | Vergleichsbsp. 2 | Vergleichsbsp. 3 | Vergleichsbsp. 4 |
|---|---|---|---|
| Monomer 1 | 1e) MMA | 1f) n-BA | 1g) n-BA |
| Menge | 81,0 g | 79,6 g | 79,6 g |
| Monomer 2 | 2e) MMA | 2f) MMA | 2g) n-BA |
| Menge | 19,9 g | 19,9 g | 20,0 g |
| Monomer 3 | 3e) MEMO | 3f) MEMO | 3g) MEMO |
| Menge | 4,8 g | 4,8 g | 4,8 g |
| Initiatormenge | 1,25 g | 1,25 g | 1,25 g |
| Mₙ (1.Sufe) | 21600 | 17800 | 18100 |
| D | 1,21 | 1,22 | 1,28 |
| Mₙ (Endprodukt) | 26800 | 20300 | 22500 |
| D | 1,31 | 1,36 | 1,38 |

Die Vergleichspiele 2 bis 4 zeigen, dass bei konventioneller Initiatorzugabe in einer Charge Polymere mit relativ eng verteilten Innenblöcken und Polydispersitätsindizes kleiner 1,4 gebildet werden.

## Patentansprüche

1. Verfahren zur Herstellung von Blockcopolymeren durch eine sequentiell durchgeführte atom transfer radical polymerization (ATRP),
**dadurch gekennzeichnet,**
**dass** ein bifunktioneller Initiator zum Starten der Reaktion zur Polymerisationslösung in einer ersten Portion zugesetzt wird und danach ein zweiter Anteil kontinuierlich zugegeben wird, und dass das Blockcopolymer der Zusammensetzung ABA insgesamt eine Molekulargewichtsverteilung mit einem Polydispersitätsindex größer 1,8 aufweist.

2. Verfahren zur Herstellung von Blockcopolymeren der Zusammensetzung ABA gemäß Anspruch 1, **dadurch gekennzeichnet, dass** es sich bei Block A, um ein Copolymer mit einer monomodalen Molekulargewichtsverteilung handelt, dass es sich bei Block B, um ein Copolymer mit einer monomodalen Molkulargewichtsverteilung mit einem Polydispersitätsindex größer 1,8 handelt, wobei die Monomere (Meth)acrylaten oder deren Mischungen sein können.

3. Verfahren zur Herstellung von Blockcopolymeren der Zusammensetzung ACBCA oder CABAC gemäß Anspruch 1 oder 2, **dadurch gekennzeichnet, dass** es sich bei den Blöcken A und C jeweils um einen Copolymerblock mit einer monomodalen Molekulargewichtsverteilung handelt, wobei die Monomere aus (Meth)acrylaten oder deren Mischungen sein können und in Block C keine Monomere mit weiteren funktionellen Gruppen eingesetzt werden.

4. Verfahren zur Herstellung von Blockcopolymeren gemäß einem der Ansprüche 1 bis 3, **dadurch gekennzeichnet, dass** der Initiator in zwei Chargen zugegeben wird, wobei die erste Initiatorcharge 10% bis 60 Gew.-%, bevorzugt 20% bis 40 Gew.-%, der gesamten Initiatormenge ausmacht und am Anfang der Polymerisation batchweise zugegeben wird, und dass die zweite Initiatorcharge direkt nach Zugabe der ersten Initiatorcharge dem System mit einer konstanten Dosierrate zudosiert wird.

5. Verfahren zur Herstellung von Blockcopolymeren gemäß Anspruch 4, **dadurch gekennzeichnet, dass** die zweite Initiatorcharge über einen Zeitraum von mindestens 30 min, bevorzugt mindestens 60 min, zudosiert wird und die Dosierung mindestens 60 min, bevorzugt mindestens 90 min vor der Zugabe der Monomermischung A bzw. C zur Polymerisationslösung beendet wird.

6. Verfahren zur Herstellung von Blockcopolymeren gemäß einem der Ansprüche 1 bis 5, **dadurch gekennzeichnet, dass** die einzelnen A-Blöcke der Blockcopolymere eine Zusammensetzung mit mindestens 1 und maximal 4, bevorzugt mindestens 1 und maximal 2 funktionellen Gruppen aufweisen.

7. Verfahren zur Herstellung von Blockcopolymeren gemäß Anspruch 6, **dadurch gekennzeichnet, dass** in die A-Blöcke Monomere, die eine ungesättigte, radikalisch polymerisierbare Gruppe und eine zweite funktionelle Gruppe, ausgewählt aus Hydroxy-, Amin-, Allyl-, Silyl-, oder Epoxygruppen aufweisen, einpolymerisiert werden.

8. Verfahren zur Herstellung von Blockcopolymeren gemäß Anspruch 2, **dadurch gekennzeichnet, dass** die einzelnen A-Blöcke jeweils weniger als 25%, bevorzugt jeweils weniger als 10% des Gesamtgewichts des ABA-Blockcopolymers ausmachen.

9. Verfahren zur Herstellung von Blockcopolymeren gemäß Anspruch 1, **dadurch gekennzeichnet, dass** einer oder mehrere der Blöcke zusätzlich Vinylester, Vinylether, Fumarate, Maleate, Styrole, Acrylonitrile oder andere mittels ATRP polymerisierbare Monomere enthält.

10. Verfahren zur Herstellung von Blockcopolymeren gemäß Anspruch 1, **dadurch gekennzeichnet, dass** das Blockcopolymer ein zahlenmittleres Molekulargewicht zwischen 5000 g/mol und 100000 g/mol, bevorzugt zwischen 7500 g/mol und 50000 g/mol aufweist.

11. Verfahren zur Herstellung von Blockcopolymeren gemäß Anspruch 1, **dadurch gekennzeichnet, dass** der ATRP-Katalysator nach der Polymerisation mittels Zugabe eines Mercaptans oder einer eine Thiolgruppe aufweisende Verbindung gefällt und mittels Filtration von der Polymerlösung abgetrennt wird.

12. ABA-Triblockcopolymer enthaltend Block A mit einer monomodalen Molkulargewichtsverteilung, sowie Block B mit einer breiten, monomodalen Molekulargewichtsverteilung mit einem Polydispersitätsindex größer 1,8, und einem Polydispersitätsindex des gesamten Blockcopolymers größer 1,8, jedoch kleiner als der des Blockes B, wobei die Monomere ausgewählt werden aus (Meth)acrylaten oder deren Mischungen, erhältlich durch ein Verfahren nach einem der Ansprüche 2 bis 11.

13. Pentablockcopolymer der Zusammensetzung ACBCA oder CABAC hergestellt gemäß Anspruch 3, **dadurch gekennzeichnet, dass** es sich bei den Blöcken A und C, jeweils um ein Copolymer mit einer monomodalen Molekulargewichtsverteilung handelt enthaltend Monomere ausgewählt aus der Gruppe der (Meth)acrylate oder deren Mischungen, dass es sich bei Block B, um ein Copolymer mit einer breiten, monomodalen Molkulargewichtsverteilung mit einem Polydispersitätsindex größer 1,8 handelt enthaltend (Meth)acrylate oder deren Mischungen, und dass das Blockcopolymer insgesamt einen Polydispersitätsindex größer 1,8, jedoch kleiner als der Polydispersitätsindex des Blockes B aufweist.

14. Verwendung eines Polymeren gemäß den Ansprüchen 12 bis 13 zur Herstellung von Schmelzklebstoffen, fließfähigen Klebstoffen, Haftklebstoffen, elastischen Dichtungsmassen, Beschichtungsmitteln oder von Schaumstoffvorläufern.

15. Verwendung von Blockcopolymeren gemäß Anspruch 12 bis 13 zur Herstellung von Heißsiegelmassen.

16. Verwendung von Blockcopolymeren nach Anspruch 14 bis 15 in vernetzbaren Zusammensetzungen, wobei das Blockcopolymer reaktive funktionelle Gruppen aufweist.

## Claims

1. Process for preparing block copolymers by a sequentially implemented atom transfer radical polymerization (ATRP),
**characterized**
**in that** a bifunctional initiator for initiating the reaction is added to the polymerization solution in a first portion and thereafter a second fraction is added continuously, and in that the block copolymer, of composition ABA, has an overall molecular weight distribution with a polydispersity index of greater than 1.8.

2. Process for preparing block copolymers of the composition ABA according to Claim 1, **characterized in that** block A is a copolymer having a monomodal molecular weight distribution, and **in that** block B is a copolymer having a monomodal molecular weight distribution with a polydispersity index of greater than 1.8, it being possible for the monomers to be (meth)acrylates or mixtures thereof.

3. Process for preparing block copolymers of composition ACBCA or CABAC according to Claim 1 or 2, **characterized in that** blocks A and C are each a copolymer block having a monomodal molecular weight distribution, it being possible for the monomers to be from (meth)acrylates or mixtures thereof, and there being no monomers with further functional groups used in block C.

4. Process for preparing block copolymers according to one of Claims 1 to 3, **characterized in that** the initiator is added in two batches, the first initiator batch accounting for 10% to 60% by weight, preferably 20% to 40% by weight, of the overall amount of initiator and being added batchwise at the start of the polymerization, and **in that** the second initiator batch is metered in directly after addition of the first initiator batch to the system, with a constant metering rate.

5. Process for preparing block copolymers according to Claim 4, **characterized in that** the second initiator batch is metered in over a period of at least 30 minutes, preferably at least 60 minutes, and the metering is ended at least 60 minutes, preferably at least 90 minutes, before the addition of the monomer mixture A respectively C to the polymerization solution.

6. Process for preparing block copolymers according to any of Claims 1 to 5, **characterized in that** the individual A blocks of the block copolymers have a composition with at least 1 and not more than 4, preferably at least 1 and not more than 2, functional groups.

7. Process for preparing block copolymers according to Claim 6, **characterized in that** monomers which have an unsaturated, free-radically polymerizable group and a second functional group selected from hydroxyl, amine, allyl, silyl or epoxy groups are copolymerized into the A blocks.

8. Process for preparing block copolymers according to Claim 2, **characterized in that** the individual A blocks each make up less than 25%, preferably less than 10%, of the overall weight of the ABA block copolymer.

9. Process for preparing block copolymers according to Claim 1, **characterized in that** one or more of the blocks additionally comprises vinyl esters, vinyl ethers, fumarates, maleates, styrenes, acrylonitriles or other monomers which are polymerizable by means of ATRP.

10. Process for preparing block copolymers according to Claim 1, **characterized in that** the block copolymer has a number-average molecular weight of between 5000 g/mol and 100 000 g/mol, preferably between 7500 g/mol and 50 000 g/mol.

11. Process for preparing block copolymers according to Claim 1, **characterized in that** the ATRP catalyst after the polymerization is precipitated by addition of a mercaptan or of a compound containing a thiol group and is separated off by filtration from the polymer solution.

12. ABA triblock copolymer comprising block A, having a monomodal molecular weight distribution, and block B, having a broad, monomodal molecular weight distribution with a polydispersity index of greater than 1.8, and a polydispersity index of the overall block copolymer of greater than 1.8 but less than that of block B, the monomers being selected from (meth)acrylates or mixtures thereof, obtainable by a process according to one of Claims 2 to 11.

13. Pentablock copolymer of the composition ACBCA or CABAC prepared according to Claim 3, **characterized in that** the blocks A and C are each a copolymer having a monomodal molecular weight distribution comprising monomers selected from the group of the (meth)acrylates or mixtures thereof, **in that** block B is a copolymer having a broad, monomodal molecular weight distribution with a polydispersity index of greater than 1.8 comprising (meth)acrylates or mixtures thereof, and **in that** the block copolymer has an overall polydispersity index of greater than 1.8 but less than the polydispersity index of the block B.

14. Use of a polymer according to either of Claims 12 and 13 for producing hotmelt adhesives, fluid adhesives, pressure-sensitive adhesives, elastic sealants, coating materials or foam precursors.

15. Use of block copolymers according to Claims 12 and 13 for producing heat-sealing compositions.

16. Use of block copolymers according to Claims 14 and 15 in crosslinkable compositions, the block copolymer having reactive functional groups.

## Revendications

1. Procédé de fabrication de copolymères séquencés par une polymérisation radicalaire par transfert d'atomes (ATRP) réalisée séquentiellement,
**caractérisé en ce qu'**un initiateur bifonctionnel est ajouté à la solution de polymérisation en une première portion pour le démarrage de la réaction, puis une seconde fraction est ajoutée en continu, et **en ce que** le copolymère séquencé de composition ABA présente au total une distribution du poids moléculaire ayant un indice de polydispersité supérieur à 1,8.

2. Procédé de fabrication de copolymères séquencés de composition ABA selon la revendication 1, **caractérisé en ce que** la séquence A consiste en un copolymère présentant une distribution monomodale du poids moléculaire, **en ce que** la séquence B consiste en un copolymère présentant une distribution monomodale du poids moléculaire ayant un indice de polydispersité supérieur à 1,8, les monomères pouvant être des (méth)acrylates ou leurs mélanges.

3. Procédé de fabrication de copolymères séquencés de composition ACBCA ou CABAC selon la revendication 1 ou 2, **caractérisé en ce que** les séquences A et C consistent chacune en une séquence copolymère présentant une distribution monomodale du poids moléculaire, les monomères pouvant être des (méth)acrylates ou leurs mélanges, et aucun monomère contenant des groupes fonctionnels supplémentaires n'étant utilisé dans la séquence C.

4. Procédé de fabrication de copolymères séquencés selon l'une quelconque des revendications 1 à 3, **caractérisé en ce que** l'initiateur est ajouté en deux charges, la première charge d'initiateur représentant 10 % à 60 % en poids, de préférence 20 % à 40 % en poids, de la quantité totale d'initiateur et étant ajoutée de manière discontinue au début de la polymérisation, et **en ce que** la seconde charge d'initiateur est ajoutée directement après l'ajout de la première charge d'initiateur au système à une vitesse d'ajout constante.

5. Procédé de fabrication de copolymères séquencés selon la revendication 4, **caractérisé en ce que** la seconde charge d'initiateur est ajoutée en une durée d'au moins 30 minutes, de préférence d'au moins 60 minutes, et l'ajout est terminé au moins 60 minutes, de préférence au moins 90 minutes, avant l'ajout du mélange de monomères A ou C à la solution de polymérisation.

6. Procédé de fabrication de copolymères séquencés selon l'une quelconque des revendications 1 à 5, **caractérisé en ce que** les séquences A individuelles des copolymères séquencés présentent une composition comprenant au moins 1 et au plus 4, de préférence au moins 1 et au plus 2, groupes fonctionnels.

7. Procédé de fabrication de copolymères séquencés selon la revendication 6, **caractérisé en ce que** des monomères comprenant un groupe insaturé polymérisable par voie radicalaire et un deuxième groupe fonctionnel choisi parmi les groupes hydroxy, amino, allyle, silyle ou époxy, sont copolymérisés dans les séquences A.

8. Procédé de fabrication de copolymères séquencés selon la revendication 2, **caractérisé en ce que** les séquences A individuelles représentent à chaque fois moins de 25 %, de préférence à chaque fois moins de 10 %, du poids total du copolymère séquencé ABA.

9. Procédé de fabrication de copolymères séquencés selon la revendication 1, **caractérisé en ce qu'**une ou plusieurs des séquences contiennent également des esters de vinyle, des éthers de vinyle, des fumarates, des maléates, des styrènes, des acrylonitriles ou d'autres monomères polymérisables par ATRP.

10. Procédé de fabrication de copolymères séquencés selon la revendication 1, **caractérisé en ce que** le copolymère séquencé présente un poids moléculaire moyen en nombre compris entre 5 000 g/mol et 100 000 g/mol, de préférence entre 7 500 g/mol et 50 000 g/mol.

11. Procédé de fabrication de copolymères séquencés selon la revendication 1, **caractérisé en ce que** le catalyseur ATRP est précipité après la polymérisation par ajout d'un mercaptan ou d'un composé comprenant un groupe thiol et séparé de la solution de polymère par filtration.

12. Copolymère triséquencé ABA contenant une séquence A qui présente une distribution monomodale du poids moléculaire, ainsi qu'une séquence B qui présente une distribution monomodale large du poids moléculaire ayant un indice de polydispersité supérieur à 1,8, et présentant un indice de polydispersité du copolymère séquencé entier supérieur à 1,8, mais toutefois inférieur à celui de la séquence B, les monomères étant choisis parmi les (méth)acrylates ou leurs mélanges, pouvant être obtenu par un procédé selon l'une quelconque des revendications 2 à 11.

13. Copolymère pentaséquencé de composition ACBCA ou CABAC fabriqué selon la revendication 3, **caractérisé en ce que** les séquences A et C consistent chacune en un copolymère présentant une distribution monomodale du poids moléculaire, contenant des monomères choisis dans le groupe des (méth)acrylates ou leurs mélanges, **en ce que** la séquence B consiste en un copolymère présentant une distribution monomodale large du poids moléculaire ayant un indice de polydispersité supérieur à 1,8, contenant des (méth)acrylates ou leurs mélanges, et **en ce que** le copolymère séquencé présente au total un indice de polydispersité supérieur à 1,8, mais toutefois inférieur à l'indice de polydispersité de la séquence B.

14. Utilisation d'un polymère selon les revendications 12 à 13 pour la fabrication d'adhésifs thermofusibles, d'adhésifs fluides, d'adhésifs sensibles à la pression, de matériaux d'étanchéité élastiques, d'agents de revêtement ou de précurseurs de mousse.

15. Utilisation de copolymères séquencés selon les revendications 12 à 13 pour la fabrication de matériaux thermoscellables.

16. Utilisation de copolymères séquencés selon les revendications 14 à 15 dans des compositions réticulables, le copolymère séquencé comprenant des groupes fonctionnels réactifs.
